# EUROPEAN PATENT SPECIFICATION

(11) **EP 4 506 312 B1**
(45) Date of publication and mention of the grant of the patent: **04.03.2026**
(21) Application number: 24152699.5
(22) Date of filing: 18.01.2024
(51) Int. Cl.: C03B 5/235, C03B 5/225

(54) **GLASS MELTING FURNACE**
GLASSCHMELZOFEN
FOUR DE FUSION DE VERRE

(30) Priority: 09.08.2023 CN 202310998258
(43) Date of publication of application: 12.02.2025
(73) Proprietor: Qinhuangdao Glass Industry Research and Design Institute Company Limited, Qinhuangdao, Hebei 066001 (CN)
(72) Inventor: WANG, Jian, Hebei, 066001 (CN); CHEN, Fu, Hebei, 066001 (CN); XU, Xinru, Hebei, 066001 (CN); XI, Guoyong, Hebei, 066001 (CN); CHEN, Zhaomin, China, 066001 (CN)
(74) Representative: Patentanwälte und Rechtsanwalt Weiß, Arat & Partner mbB

(56) References cited:
- EP-A2- 1 136 451
- CN-U- 202 430 112
- JP-A- 2005 035 826
- JP-A- 2017 186 217
- US-A1- 2010 242 545

## Description

### CROSS REFERENCE TO RELATED APPLICATIONS

The present application claims priority to the Chinese patent application No. 202310998258.4, filed on August 09, 2023 to the CNIPA, and entitled "A GLASS MELTING AND BURNING DEVICE".

### Technical Field

The present invention relates to the technical field of float glass production equipment, in particular relates to a glass melting and burning device.

### Background

Pure oxygen combustion-supporting technology of No.0 spray gun in float glass melting furnace has been widely used because it can improve glass yield and quality, reduce production cost, reduce energy consumption and pollutant emission, and is an effective means of energy saving and emission reduction in float glass production.

In the prior art, a pair of full-oxygen spray guns are added in the interval of 4-6m between the No.1 small furnace and the feeding port, so that the overall erosion of the furnace body by high-pressure hot air flow is relatively slowed down, while the effective heat for melting the batch is significantly increased, and at the same time, the rapid melting of the batch reduces the spattering of the batch, thereby providing a guarantee for prolonging the service life of the melting furnace. However, the smoke gas product produced by the full-oxygen spray guns contains carbon dioxide and water, especially the water therein would be adsorbed to the surface of the unmelted glass powder, and thus the viscosity of the surface of the unmelted glass powder is reduced to accelerate melting, which leads to the rapid volatilization of the upper layer of glass powder and the blockage of the heat storage chambers of the No.1 and No.2 small furnaces at a downstream position in the furnace.

The EP 1 136 451 A2 relates to a process and furnace for melting glass forming ingredients. Glass forming ingredients are melted in a furnace having a melting zone and a fining zone and in which the majority of the combustion energy over the melting zone is provided by oxy-fuel combustion while a majority of the combustion energy over the fining zone is provided by air-fuel combustion.

The JP2005035826 A discloses a glass melting furnace that has a plurality of burners, and in the furnace, the ejecting amount of oxygen from each burner can be controlled according to the temperature distribution in the furnace. The ejection amount of oxygen of each burner used in the central part of the furnace is different from the ejection amount of oxygen of each burner used in the vicinity of a tapping part and the peripheral part of the furnace.

The CN 202430112 U discloses a float glass melting furnace comprising a melting furnace. A material feeding port is arranged on the front portion of the melting furnace, a blocking neck is arranged on the back portion of the melting furnace, full oxygen burners and air burning devices are arranged on breast walls on two sides of the melting furnace, the full oxygen burners are communicated with an air and fuel gas mixing device, the air burning devices comprise small furnaces for feeding air and air burners for feeding fuel gas.

### Summary

Thus, a technical problem to be solved by the present invention is how to overcome the defect that the heat storage chambers of No. 1 and No.2 small furnaces would easily be blocked after adding full-oxygen spray guns in the full-oxygen combustion glass melting furnace in the prior art, thereby providing a glass melting and burning device.

In order to solve the above technical problem, the present invention provides a glass melting and burning device that comprises: a full-oxygen combustion section, configured to be provided with at least three groups of full-oxygen combustion spray guns therein;
a heat storage section, configured to be arranged downstream of the full-oxygen combustion section, and a plurality of groups of air combustion spray guns and at least one additional group of full-oxygen combustion spray guns are installed in the heat storage section;
a defoaming section, configured to be arranged downstream of the heat storage section, and a defoaming spray gun is installed in the defoaming section;
wherein another group of full-oxygen combustion spray guns are installed between the heat storage section and the defoaming section.

Optionally, in the heat storage section, the plurality of groups of air combustion spray guns are respectively arranged on both sides of the additional group of full-oxygen combustion spray guns, and the plurality of groups of air combustion spray guns are symmetrically distributed on both sides of the additional group of full-oxygen combustion spray guns.

Optionally, a distance from the defoaming section to said another group of full-oxygen combustion spray guns installed between the heat storage section and the defoaming section is 1.0m-1.5m.

Optionally, three to six groups of full-oxygen combustion spray guns are arranged in the full-oxygen combustion section.

Optionally, each group of full-oxygen combustion spray guns comprises at least one pair of full-oxygen spray gun bodies which are arranged opposite to each other.

Optionally, one or two groups of defoaming spray guns are provided.

Optionally, a feeding port is arranged upstream of the full-oxygen combustion section.

The technical scheme of the present invention has the following advantages:
1) the glass melting and burning device provided by the present invention comprises a full-oxygen combustion section, configured to be provided with at least three groups of full-oxygen combustion spray guns therein; a heat storage section, configured to be arranged downstream of the full-oxygen combustion section, and a plurality of groups of air combustion spray guns are installed in the heat storage section; a defoaming section, configured to be arranged downstream of the heat storage section, and a defoaming spray gun is installed in the defoaming section.
   At least three groups of full-oxygen combustion spray guns are arranged at the original position for No.0 air spray gun, thus replacing the No.1 and No.2 small furnaces, and the plurality of groups of full-oxygen combustion spray guns can quickly glaze the glass. The original No.1 and No.2 small furnaces are replaced by the plurality of groups of full-oxygen combustion spray guns, and the full-oxygen combustion section and the heat storage section are arranged separately, so that there is no need to arrange small furnaces and heat storage chambers in the area of full-oxygen combustion spray guns, and there would not be a situation of blockage in this area, and the blockage and replacement frequency of heat storage chambers can be reduced.
2) in the glass melting and burning device provided by the present invention, at least one additional group of full-oxygen combustion spray guns are arranged in the heat storage section. By arranging the additional group of full-oxygen combustion spray guns in the heat storage section, the material passes through a local high temperature area when it advances in the heat storage section, which can accelerate the process of glass clarification and defoaming.
3) in the glass melting and burning device provided by the present invention, another group of full-oxygen combustion spray guns are installed between the heat storage section and the defoaming section. The opening degree of the full-oxygen combustion spray guns at this position is selected according to the requirements of glass melting, so as to adjust the homogenization temperature and the forming parameters of glass liquid, which is convenient to switch and flexible to adjust as compared with air combustion spray guns.

### Brief description of the drawings

In order to explain the technical schemes in the specific embodiments of the present invention or in the prior art more clearly, the drawings needed in the description of the specific embodiments or the prior art will be briefly introduced below. Apparently, the drawings described below only represent some embodiments of the present invention. For a person with ordinary skill in the art, other drawings can be derived from the drawings herein without expenditure of creative labor.

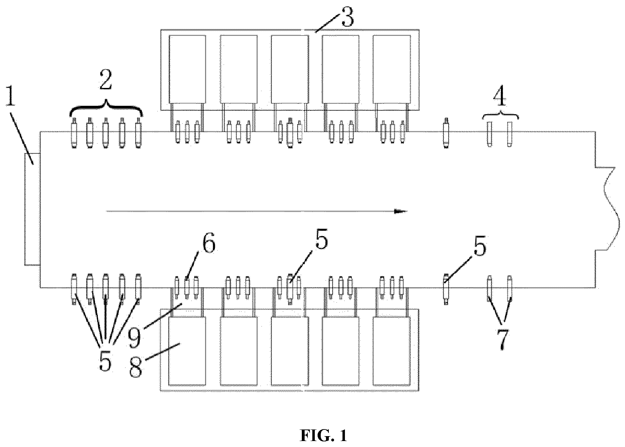

Fig. 1 is a schematic structural view of a glass melting and burning device provided in an embodiment of the present invention.

### Reference numerals:

1-feeding port; 2-full-oxygen combustion section; 3-heat storage section; 4-defoaming section; 5-full-oxygen combustion spray gun; 6-air combustion spray gun; 7-defoaming spray gun; 8-heat storage chamber; 9-small furnace.

### Detailed Description of the Specific Embodiments

Hereinafter, the technical scheme of the present invention will be described clearly and completely with reference to the appended drawings. Apparently, the described embodiments only represent part of embodiments of the present invention, not all of them. Based on the embodiments described in the present invention, all other embodiments obtainable by a person with ordinary skill in the art without expenditure of creative labor belong to the protection scope of the present invention.

In the description of the present invention, it should be noted that the orientational or positional relationship indicated by terms such as "center", "upper", "lower", "left", "right", "vertical", "horizontal", "inner" and "outer" is based on the orientational or positional relationship shown in the appended drawings, and is only for the convenience of describing the present invention and simplifying the description, and is not intended to indicate or imply that the device or element referred to must have a specific orientation or must be constructed and operated in a specific orientation, therefore it cannot to be understood as a limitation to the present invention. Furthermore, the terms such as "first", "second", and "third" are used for descriptive purposes only and cannot be understood as indicating or implying relative importance.

In the description of the present invention, it should be noted that, unless otherwise specified and defined, the terms such as "installation", "interconnection" and "connection" should be broadly understood, for example, it can be fixed connection, detachable connection or integral connection; it can be a mechanical connection or an electrical connection; it can be direct connection, can also be indirect connection through an intermediate medium, or can be internal communication between two elements. For a person with ordinary skill in the art, the specific meanings of the above terms in the present invention can be understood according to the specific circumstances.

In addition, the technical features involved in different embodiments of the present invention described hereinafter can be combined with each other as long as they do not conflict with each other.

Fig. 1 shows a glass melting and burning device provided by this embodiment, which comprises a full-oxygen combustion section 2, a heat storage section 3 and a defoaming section 4. The direction of the arrow in Fig. 1 is the advancing direction of glass powder in the glass melting and burning device. The glass melting and burning device in this embodiment is a float glass melting furnace, and in other embodiments, the glass melting and burning device can also be other devices for melting glass powder materials.

The full-oxygen combustion section 2 is configured to be provided with at least three groups of full-oxygen combustion spray guns 5 therein. The heat storage section 3 is configure to be arranged downstream of the full-oxygen combustion section 2, and a plurality of groups of air combustion spray guns 6 are installed in the heat storage section 3. The defoaming section 4 is configured to be arranged downstream of the heat storage section 3, and a defoaming spray gun 7 is installed in the defoaming section 4. A feeding port 1 is arranged upstream of the full-oxygen combustion section 2 for feeding glass powder into the melting furnace.

Three to six groups of full-oxygen combustion spray guns 5 are arranged in the full-oxygen combustion section 2. In order to ensure that the upper layer of glass can be glazed before the glass raw materials enter the heat storage section 3 so as to reduce the evaporation of the glass raw materials in the heat storage section 3, five groups of full-oxygen combustion spray guns 5 are arranged in the full-oxygen combustion section 2 in this embodiment. In other embodiments, three groups, four groups or six groups of full-oxygen combustion spray guns 5 may be set according to the required melting and glazing degree of glass powder.

At least one additional group of full-oxygen combustion spray guns 5 are arranged in the heat storage section 3. In this embodiment, an additional group of full-oxygen combustion spray guns 5 and five pairs of small furnaces 9 are arranged in the heat storage section 3, and each small furnace 9 is communicated with a heat storage chamber 8 for accommodating fuel. The fuel of the air combustion spray guns 6 in this embodiment is natural gas. Three air combustion spray guns 6 are communicated with each small furnace in both the two pairs of small furnaces 9 in the upstream position and the two pairs of small furnaces 9 in the downstream position. And for the pair of small furnaces 9 in the middle, each small furnace thereof is communicated with two air combustion spray guns 6 and a full-oxygen combustion spray gun 5 installed between these two air combustion spray guns 6, so that the plurality of groups of air combustion spray guns 6 are symmetrically distributed on both sides of the additional group of full-oxygen combustion spray guns 5.

Another group of full-oxygen combustion spray guns 5 are installed between the heat storage section 3 and the defoaming section 4, the distance from the defoaming section 4 to said another group of full-oxygen combustion spray guns 5 installed between the heat storage section 3 and the defoaming section 4 is 1.0m-1.5m. In this embodiment, each group of full-oxygen combustion spray guns 5 in the full-oxygen combustion section 2, in the heat storage section 3 and between the heat storage section 3 and the defoaming section 4 comprises a pair of full-oxygen spray gun bodies which are arranged opposite to each other.

One or two groups of defoaming spray guns 7 are provided in the defoaming section 4. In this embodiment, the defoaming section 4 is provided with two groups of defoaming spray guns 7, and each group of defoaming spray guns 7 comprises a pair of defoaming spray gun bodies arranged opposite to each other.

In the glass melting and burning device provided by this embodiment, five groups of full-oxygen combustion spray guns 5 are added to the original position for No.0 air spray gun, thus replacing No.1 and No.2 small furnaces 9, and the positions of the heat storage chambers 8 of No.1 and No.2 small furnaces 9 are changed into full-oxygen combustion spray guns 5, so that the glass can be glazed quickly, there would not be a situation of blockage in this area, and the blockage and replacement frequency of heat storage chambers 8 can be reduced. An additional pair of full-oxygen combustion spray guns 5 are added at the hot spot in the middle of the heat storage section 3, and the full-oxygen combustion spray guns 5 can burn fully and completely to generate high temperature, which can accelerate the clarification and defoaming process of glass in the heat storage section 3. The last pair of spray guns adopts full-oxygen combustion spray guns 5, the opening degree of the full-oxygen combustion spray gun 5 at this position is selected according to the requirements of glass melting, and the main function thereof is to adjust the homogenization temperature and the forming parameters of the glass fluid, and as compared with air combustion spray guns 6, it has the characteristics of convenient switching and flexible adjustment. And at a position of 1.0m-1.5m behind the last pair of full-oxygen combustion spray guns 5, two defoaming spray guns 7 are added on each of the two lateral sides, which can reduce bubbles on the glass surface and improve the glass quality.

## Claims

1. A glass melting and burning device, **characterized in** comprising:
a full-oxygen combustion section (2), configured to be provided with at least three groups of full-oxygen combustion spray guns (5) therein;
a heat storage section (3), configured to be arranged downstream of the full-oxygen combustion section (2), and a plurality of groups of air combustion spray guns (6) and at least one additional group of full-oxygen combustion spray guns (5) are installed in the heat storage section (3);
a defoaming section (4), configured to be arranged downstream of the heat storage section (3), and a defoaming spray gun (7) is installed in the defoaming section (4);
wherein another group of full-oxygen combustion spray guns (5) are installed between the heat storage section (3) and the defoaming section (4).

2. The glass melting and burning device according to claim 1, **characterized in that**, in the heat storage section (3), the plurality of groups of air combustion spray guns (6) are respectively arranged on both sides of the additional group of full-oxygen combustion spray guns (5), and the plurality of groups of air combustion spray guns (6) are symmetrically distributed on both sides of the additional group of full-oxygen combustion spray guns (5).

3. The glass melting and burning device according to claim 1, **characterized in that**, a distance from the defoaming section (4) to said another group of full-oxygen combustion spray guns (5) installed between the heat storage section (3) and the defoaming section (4) is 1.0m-1.5m.

4. The glass melting and burning device according to claim 1 or 2, **characterized in that**, three to six groups of full-oxygen combustion spray guns (5) are arranged in the full-oxygen combustion section (2).

5. The glass melting and burning device according to claim 1 or 2, **characterized in that**, each group of full-oxygen combustion spray guns (5) comprises at least one pair of full-oxygen spray gun bodies which are arranged opposite to each other.

6. The glass melting and burning device according to claim 1 or 2, **characterized in that**, one or two groups of defoaming spray guns (7) are provided.

7. The glass melting and burning device according to claim 1 or 2, **characterized in that**, a feeding port (1) is arranged upstream of the full-oxygen combustion section (2).

## Patentansprüche

1. Vorrichtung zum Schmelzen und Brennen von Glas, **dadurch gekennzeichnet, dass** sie umfasst:
einen Vollsauerstoff-Verbrennungsabschnitt (2), der so ausgebildet ist, dass er mit mindestens drei Gruppen von Vollsauerstoff-Verbrennungsbrennern (5) versehen ist;
einen Wärmespeicherabschnitt (3), der so konfiguriert ist, dass er stromabwärts des Vollsauerstoff-Verbrennungsabschnitts (2) angeordnet ist, wobei in dem Wärmespeicherabschnitt (3) mehrere Gruppen von Luftverbrennungsbrennern (6) sowie mindestens eine zusätzliche Gruppe von Vollsauerstoff-Verbrennungsbrennern (5) installiert sind;
einen Entschäumungsabschnitt (4), der stromabwärts des Wärmespeicherabschnitts (3) angeordnet ist, wobei in dem Entschäumungsabschnitt (4) ein Entschäumungsbrenner (7) installiert ist;
wobei zwischen dem Wärmespeicherabschnitt (3) und dem Entschäumungsabschnitt (4) eine weitere Gruppe von Vollsauerstoff-Verbrennungsbrennern (5) installiert ist.

2. Vorrichtung zum Schmelzen und Brennen von Glas nach Anspruch 1, **dadurch gekennzeichnet, dass** im Wärmespeicherabschnitt (3) die mehreren Gruppen von Luftverbrennungsbrennern (6) jeweils auf beiden Seiten der zusätzlichen Gruppe von Vollsauerstoff-Verbrennungsbrennern (5) angeordnet sind und die mehreren Gruppen von Luftverbrennungsbrennern (6) symmetrisch zu beiden Seiten der zusätzlichen Gruppe von Vollsauerstoff-Verbrennungsbrennern (5) verteilt sind.

3. Vorrichtung zum Schmelzen und Brennen von Glas nach Anspruch 1, **dadurch gekennzeichnet, dass** ein Abstand zwischen dem Entschäumungsabschnitt (4) und der zwischen dem Wärmespeicherabschnitt (3) und dem Entschäumungsabschnitt (4) installierten weiteren Gruppe von Vollsauerstoff-Verbrennungsbrennern (5) 1,0 m bis 1,5 m beträgt.

4. Vorrichtung zum Schmelzen und Brennen von Glas nach Anspruch 1 oder 2, **dadurch gekennzeichnet, dass** im Vollsauerstoff-Verbrennungsabschnitt (2) drei bis sechs Gruppen von Vollsauerstoff-Verbrennungsbrennern (5) angeordnet sind.

5. Vorrichtung zum Schmelzen und Brennen von Glas nach Anspruch 1 oder 2, **dadurch gekennzeichnet, dass** jede Gruppe von Vollsauerstoff-Verbrennungsbrennern (5) mindestens ein Paar von Vollsauerstoff-Brennerkörpern umfasst, die einander gegenüberliegend angeordnet sind.

6. Vorrichtung zum Schmelzen und Brennen von Glas nach Anspruch 1 oder 2, **dadurch gekennzeichnet, dass** eine oder zwei Gruppen von Entschäumungsbrennern (7) vorgesehen sind.

7. Vorrichtung zum Schmelzen und Brennen von Glas nach Anspruch 1 oder 2, **dadurch gekennzeichnet, dass** stromaufwärts des Vollsauerstoff-Verbrennungsabschnitts (2) eine Beschickungsöffnung (1) angeordnet ist.

## Revendications

1. Dispositif de fusion et de cuisson de verre, **caractérisé en ce qu'**il comprend :
une section de combustion d'oxygène pur (2), configurée pour être équipée d'au moins trois groupes de pistolets de pulvérisation de combustion d'oxygène pur (5) en son sein ;
une section d'accumulation de chaleur (3), configurée pour être disposée en aval de la section de combustion d'oxygène pur (2), et une pluralité de groupes de pistolets de pulvérisation de combustion d'air (6) et au moins un groupe additionnel de pistolets de pulvérisation de combustion d'oxygène pur (5) sont installés dans la section d'accumulation de chaleur (3) ;
une section de démoussage (4), configurée pour être disposée en aval de la section d'accumulation de chaleur (3), et un pistolet de pulvérisation de démoussage (7) est installé dans la section de démoussage (4) ;
dans lequel les pistolets d'un autre groupe de pistolets de pulvérisation de combustion d'oxygène pur (5) sont installés entre la section d'accumulation de chaleur (3) et la section de démoussage (4).

2. Dispositif de fusion et de cuisson de verre selon la revendication 1, **caractérisé en ce que**, dans la section d'accumulation de chaleur (3), les groupes de la pluralité de groupes de pistolets de pulvérisation de combustion d'air (6) sont disposés respectivement des deux côtés du groupe additionnel de pistolets de pulvérisation de combustion d'oxygène pur (5), et les groupes de la pluralité de groupes de pistolets de pulvérisation de combustion d'air (6) sont répartis de manière symétrique des deux côtés du groupe additionnel de pistolets de pulvérisation de combustion d'oxygène pur (5).

3. Dispositif de fusion et de cuisson de verre selon la revendication 1, **caractérisé en ce que**, une distance de la section de démoussage (4) audit autre groupe de pistolets de pulvérisation de combustion d'oxygène pur (5) installés entre la section d'accumulation de chaleur (3) et la section de démoussage (4) est comprise entre 1,0 m et 1,5 m.

4. Dispositif de fusion et de cuisson de verre selon la revendication 1 ou la revendication 2, **caractérisé en ce que**, de trois à six groupes de pistolets de pulvérisation de combustion d'oxygène pur (5) sont disposés dans la section de combustion d'oxygène pur (2).

5. Dispositif de fusion et de cuisson de verre selon la revendication 1 ou la revendication 2, **caractérisé en ce que**, chaque groupe de pistolets de pulvérisation de combustion d'oxygène pur (5) comprend au moins deux corps de pistolet de pulvérisation d'oxygène pur qui sont disposés en regard l'un de l'autre.

6. Dispositif de fusion et de cuisson de verre selon la revendication 1 ou la revendication 2, **caractérisé en ce que**, un ou deux groupes de pistolets de pulvérisation de démoussage (7) sont prévus.

7. Dispositif de fusion et de cuisson de verre selon la revendication 1 ou la revendication 2, **caractérisé en ce que**, un orifice d'alimentation (1) est disposé en amont de la section de combustion d'oxygène pur (2).
